# EUROPEAN PATENT APPLICATION

(11) **EP 1 575 179 A2**
(43) Date of publication of application: **14.09.2005**
(21) Application number: 04258183.5
(22) Date of filing: 30.12.2004
(51) Int. Cl.: H04B 1/28

(54) **Demodulation device and demodulation method**

(30) Priority: 09.03.2004 JP 2004066007
(71) Applicant: FUJITSU LIMITED, Kanagawa 211-8588 (JP)
(72) Inventor: Marutani, Masazumi, c/o Fujitsu Limited, Kawasaki-shi Kanagawa 211-8588 (JP)
(74) Representative: Mohun, Stephen John

(57) **Abstract**

The present invention provides a demodulation device including: a synthesizer generating a local signal; and a mixer mixing an input signal, which is modulated by a carrier frequency, with the local signal to output an intermediate frequency signal whose carrier has an intermediate frequency. An intermediate frequency setting unit sets one of a plurality of intermediate frequencies, and a demodulator extracts and reproduces an intermediate frequency signal at the set intermediate frequency.

## Description

### CROSS-REFERENCE TO RELATED APPLICATIONS

This application is based upon and claims the benefit of priority from the prior Japanese Patent Application No. 2004-066007, filed on March 9, 2004, the entire contents of which are, incorporated herein by reference.

### BACKGROUND OF THE INVENTION

### [Field of the Invention]

The present invention relates to a demodulation technique, and more particularly, to a technique of demodulating an input signal modulated by a carrier frequency.

### [Description of the Related Art]

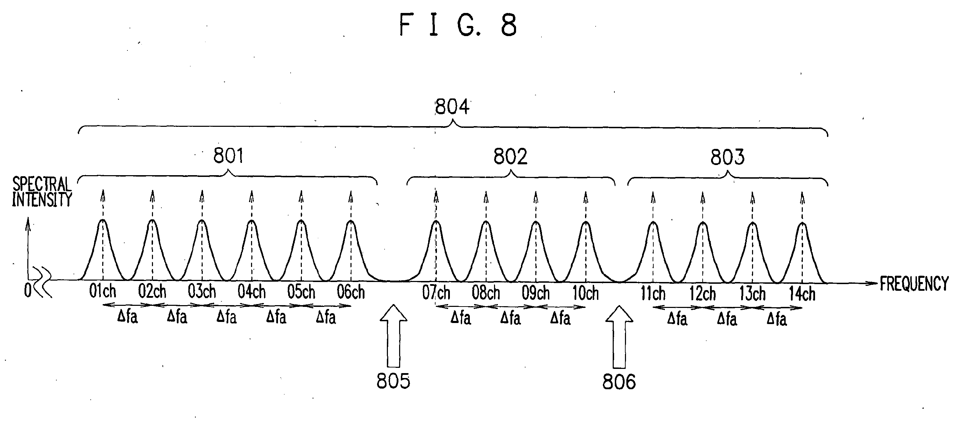

Fig. 8 shows an example of a frequency band of radio communication such as television broadcasting and cellular phones. The horizontal axis shows frequency and the vertical axis shows spectral intensity. For example, all channels from 01 ch (channel) to 06 ch (channel) in a frequency band 801 are arranged at regular intervals of a frequency Δf, all channels from 07 ch (channel) to 10 ch (channel) in a frequency band 802 are arranged at regular intervals of a frequency Δfa, and all channels from 11 ch (channel) to 14 ch (channel) in a frequency band 803 are arranged at regular intervals of a frequency Δfa. However, between the frequency bands 801 and 802, there is a frequency band gap 805, and between the frequency bands 802 and 803, there is a frequency band gap 806. As a result, in the whole frequency band 804 of 01 ch (channel) to 14 ch (channel), frequency intervals between the channels are irregular. Hereinafter, "ch" signifies channel.

The increasing use of frequencies by radio communication such as television broadcasting and cellular phones and consequent lack in frequency bands are socially recognized as serious problems. Review on the use of frequency bands allocated in the past and adjustment of reallocation of the frequency bands with the intention of unification as an international standard are under way. As a result, in some application, discontinuous bands are allocated and frequencies settable for co-use with the current system are limited. Consequently, in some cases, carrier frequencies of signal radio waves are not arranged at regular intervals in the frequency domain as shown in Fig. 8. Further, such signal arrangement at irregular intervals is adopted also in cable communication such as optical communication in order to reduce restrictions due to characteristics of materials and to inhibit interference between signals.

Regardless of cable or radio, a reception method of a reception system is in demand that receives only a desired signal component from a set of a plurality of signals that are not arranged based on a simple rule in such a frequency domain.

In the following description, television broadcasting will be taken as an example. In television broadcasting, in order to select only a desired channel from a plurality of channels for reception, it is necessary for a receiver side to segment only a specific signal component from a wide frequency range and reproduce the signal. For signal reproduction in an actual electronic circuit, signal processing at a low frequency has a great advantage in light of power consumption and performance of the circuit. Intermediate frequency (IF) reception is also one of such reception methods.

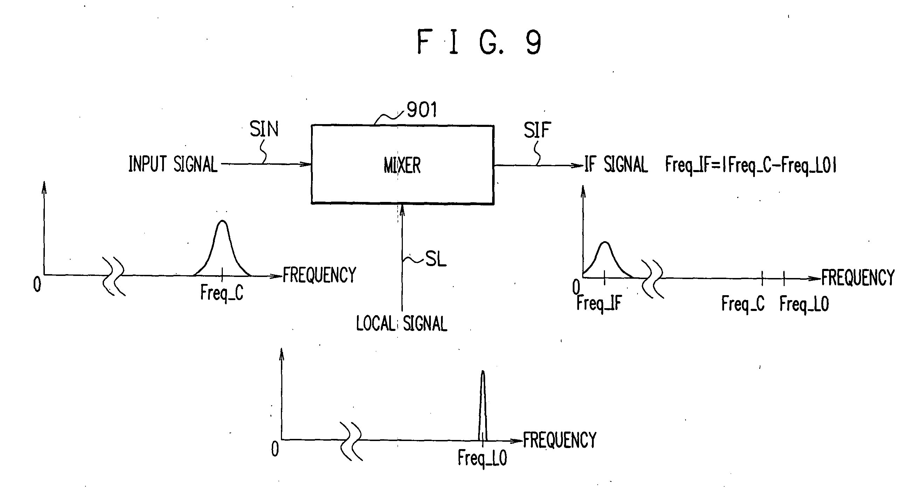

Fig. 9 shows the intermediate frequency reception. A mixer 901 mixes an input signal SIN with a local signal SL to output an intermediate frequency signal SIF. Several terms will be defined in order to describe the intermediate frequency reception. As for the distribution in a frequency domain (hereinafter, referred to as a frequency spectrum) of the input signal SIN, a set of components at various frequencies modulated according to information and a modulation method are distributed around a center carrier frequency Freq_C called a carrier frequency. For example, in a radio communication field, such signal spectra are managed by the government, industrial organizations, and so on, and they are arranged in large numbers at intervals of a prescribed frequency to be distributed. As the carrier frequencies Freq_C thereof, high frequencies on the order of MHz or GHz are used. In order to shift these high frequencies to low carrier frequencies on the order of kHz in a receiver, the local signal (at a frequency of Freq_L0) SL is used. The mixer 901 which is a multiplier mixes the received input signal SIN with the local signal SL, so that the input signal SIN is shifted to the intermediate frequency signal SIF whose frequency distribution center is an intermediate frequency Freq_IF (|Freq_C - Freq_L0|) which is a difference frequency.

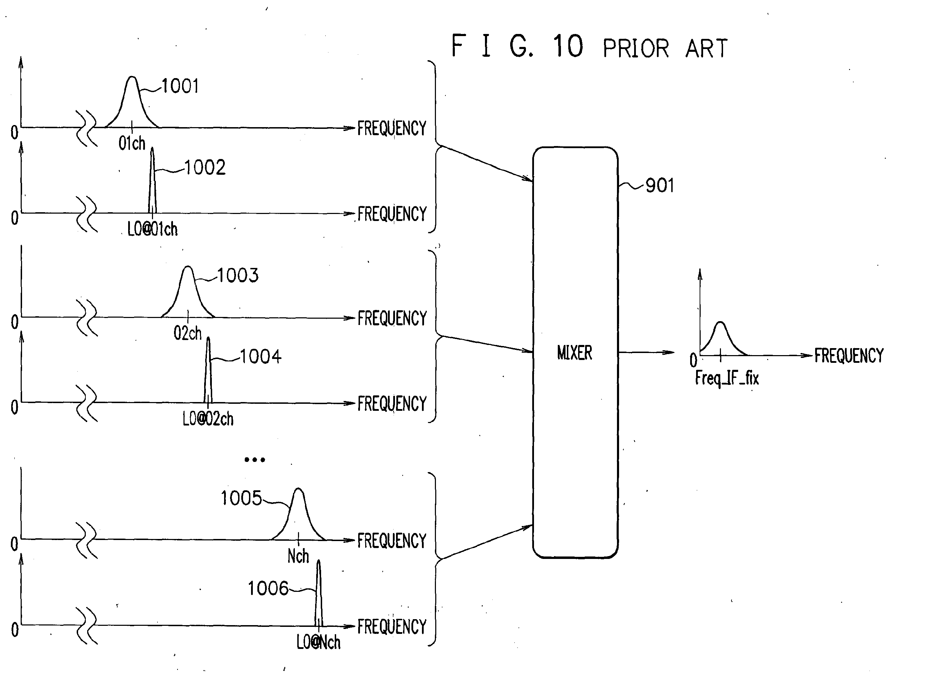

Fig. 10 shows a reception method according to a prior art. The mixer 901 mixes an input signal 1001 of 01 ch with a local signal 1002 to output an intermediate frequency signal at an intermediate frequency Freq_IF_fix. Further, the mixer 901 mixes an input signal 1003 of 02 ch with a local signal 1004 to output an intermediate frequency signal at the intermediate frequency Freq_IF_fix. The mixer 901 also mixes an input signal 1005 of N ch with a local signal 1006 to output an intermediate frequency signal at the intermediate frequency Freq_IF_fix.

As shown in Fig. 10, the intermediate frequencies Freq_IF in Fig. 9 are normally fixed at one value Freq_IF_fix in consideration of the spread of the frequency spectrum of a signal to be reproduced and the interference from unnecessary signals existing around the input signal SIN. A synthesizer side that outputs the local signal SL at the frequency Freq_L0 adjusts oscillation frequencies when supplying the local signal SL, so that the difference frequencies are constantly fixed at Freq_IF_fix.

In Fig. 10, in order to constantly set the difference frequencies at the fixed frequency Freq_IF_fix, it is necessary that the frequencies of the local signals outputted by the synthesizer can be set at frequencies equal to Freq_C - Freq_IF_fix or Freq_C + Freq_IF_fix, even when the carrier frequencies Freq_C of the input signal SIN of all channels differ. This has not caused a significant problem if all the carrier frequencies Freq_C are arranged at regular intervals, but if not, this setting is not possible if a phase locked loop circuit (PLL), which determines the frequency of the synthesizer, has a simple circuitry. Consequently, several problems are caused. This will be described using a modeled PLL with a simple circuitry.

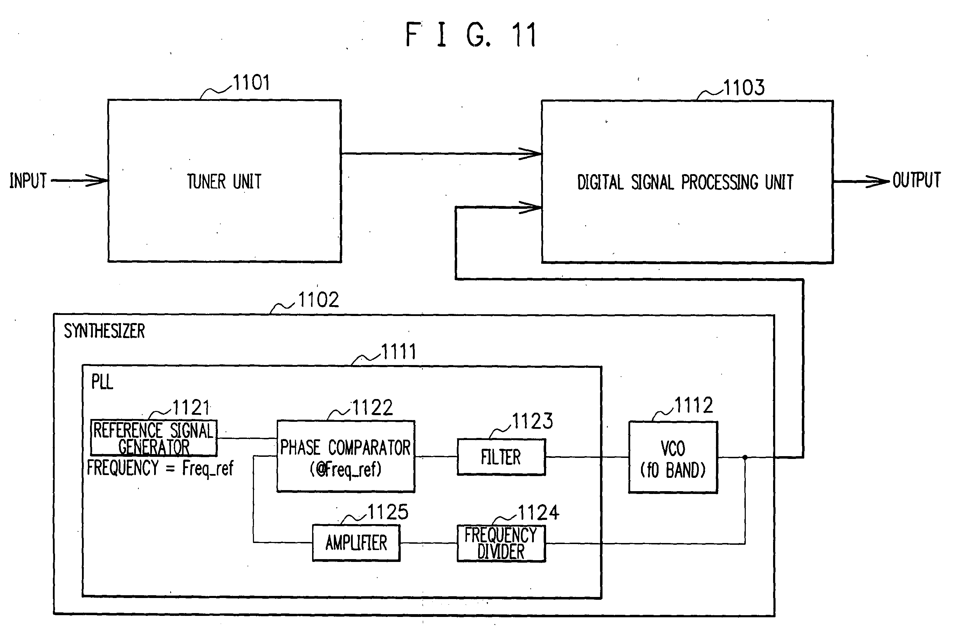

Fig. 11 shows a configuration of a reception system. A synthesizer 1102 has a PLL (Phase Locked Loop) circuit 1111 and a VCO (Voltage Controlled Oscillator) circuit 1112, and it outputs the local signal SL in Fig. 9. A tuner unit 1101 selects and extracts an input signal SIN of one channel among, for example, 01 ch to 14 ch shown in Fig. 8 and outputs it to a digital signal processing unit 1103. The digital signal processing unit 1103 includes the mixer 901 in Fig. 9, and it mixes the input signal SIN and the local signal SL to output the resultant signal.

The PLL circuit 1111 has a reference signal generator (oscillation frequency Freq_ref) 1121, a phase comparator 1122, a filter 1123, a frequency divider 1124, and an amplifier 1125. The reference signal generator 1121 outputs a reference signal at the frequency Freq_ref. The phase comparator 1122 compares the reference signal and an output signal of the amplifier 1125 to output the comparison result to the filter 1123. Based on the output signal of the filter 1123, the VCO circuit 1112 adjusts the phase to generate a signal. The frequency divider 1124 divides the frequency of the output signal of the VCO circuit 1112 to 1/P. The amplifier 1125 amplifies an output signal of the frequency divider 1124 to output the resultant signal to the phase comparator 1122.
As a result, the VCO circuit 1112 outputs the local signal having a frequency P × Freq_ref.

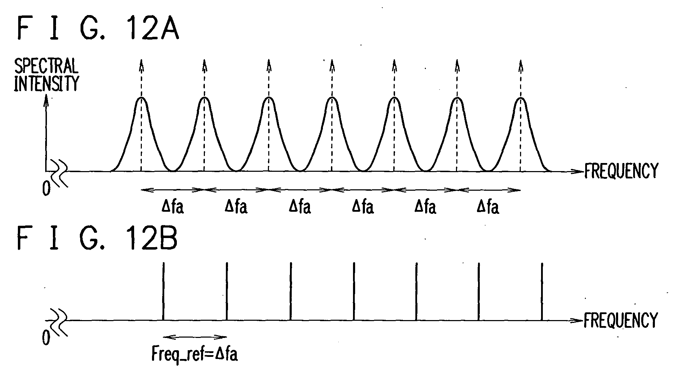

Fig. 12A shows an input signal in which channels are arranged at regular intervals of the frequency Δfa, and Fig. 12B shows a local signal corresponding to the input signal.

As shown in Fig. 12A, when carrier frequencies of a signal to be received are arranged at regular intervals of Δfa, the synthesizer 111 (Fig. 11) with the simplest structure sets the frequency Freq_ref of the reference signal generator 1121 to Δfa, and adopts, as the frequency divider 1124, one that is capable of setting a division ratio P in a large range. As shown in Fig. 12B, the synthesizer 1111 is capable of outputting the local signals with the frequency of P × Δfa. A concrete example will be shown below.

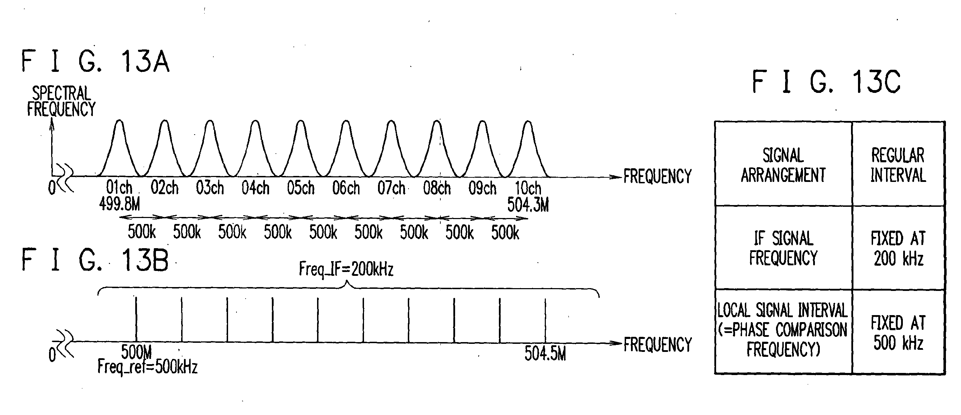

Fig. 13A shows an input signal in which carrier frequencies of respective channels are arranged at regular intervals. The frequency interval is 500 kHz. The carrier frequency Freq_C of 01 ch is 499.8 MHz, and the carrier frequency Freq_C of 10 ch is 504.3 MHz. The carrier frequencies of the input signals of 01 ch to 10 ch fall in the range of 499.8 MHz to 504.3 MHz and are arranged at 500 kHz intervals.

Fig. 13B shows a local signal corresponding to the input signal in Fig. 13A. The frequencies of the local signals of the respective channels are arranged at regular intervals, and the frequency interval thereof is the same as that of the input signals, i.e., 500 kHz. Accordingly, the frequency Freq_ref of the reference signal of the reference signal generator 1121 in Fig. 11 is also 500 kHz. The local signal frequency Freq_L0 of 01 ch is 500 MHz (1/1000 frequency division). The local signal frequency Freq_L0 of 10 ch is 504.5 MHz (1/1009 frequency division). The frequencies of the local signals fall in a range from 500 MHz to 504.5 MHz, and the greatest common divisor of all these frequencies is 500 kHz. Necessary frequency division values to be set by the frequency divider 1124 in the PLL circuit 1111 range from 1/1000 to 1/1009.

The intermediate frequency Freq_IF is an absolute value of a difference between the carrier frequency Freq_C of the input signal and the local signal frequency Freq_L0. Therefore, the intermediate frequencies Freq_IF in all the channels are fixed at 200 kHz.

As shown in Fig. 13C, when the input signals of the respective channels are arranged at regular intervals as in Fig. 13A, the frequencies Freq_IF of the intermediate frequency signals are fixed at 200 kHz, and the frequency interval of the local signals in Fig. 13B (a frequency Freq_ref of a phase comparison reference signal) is fixed at 500 kHz.

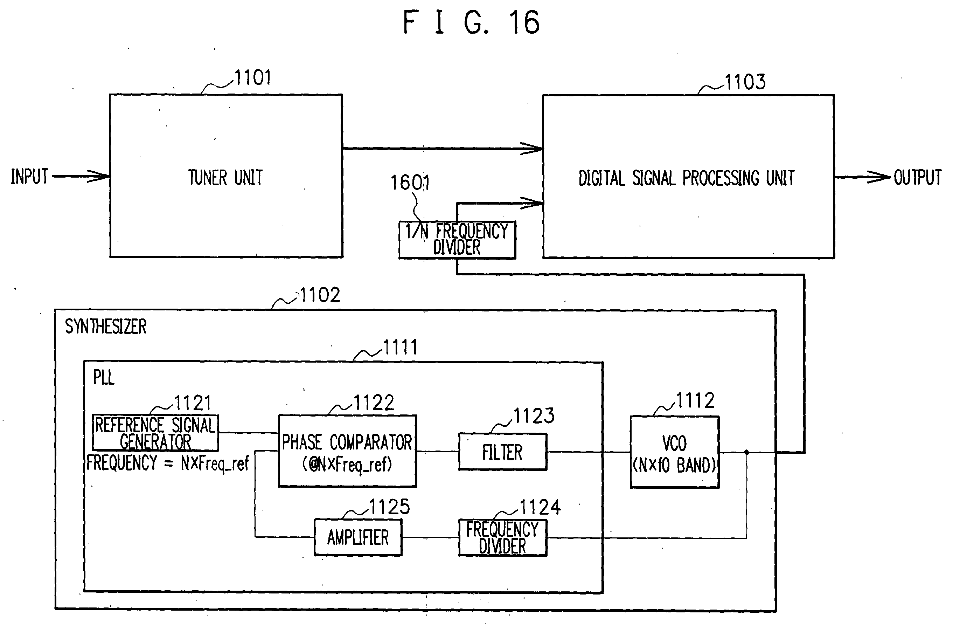

Fig. 16 shows a reception system structured such that a 1/N frequency divider 1601 is added to the reception system in Fig. 11. The 1/N frequency divider 1601 is provided between the synthesizer 1102 and the digital signal processing unit 1103.

The reference signal generator 1121 outputs a reference signal at a frequency N × Freq_ref that is N times as high as that in Fig. 11. The phase comparator 1122 compares phases based on the reference signal. As a result, the VCO circuit 1112 outputs a signal at a frequency N × P × Freq_ref that is N times as high as that in Fig. 11. The 1/N frequency divider 1601 divides a frequency of the output signal of the VCO circuit 1112 to 1/N to output a local signal at a frequency P × Freq_ref to the digital signal processing unit 1103.

Further, Japanese Patent Application Laid-open No. Hei 5-251937 discloses a frequency converter used for conversion of a radio frequency and an intermediate frequency.

Embodiments of the present invention have as an aim that, when input signals of a plurality of channels whose carrier frequencies are arranged at irregular intervals are mixed with local signals of the respective channels, a frequency interval of the local signals of the respective channels is set large.

The invention is defined in the attached independent claims to which reference should now be made. Further, preferred features may be found in the sub-claims appended thereto.

According to one of the aspects of the present invention, provided is a demodulation device including: a synthesizer generating a local signal; and a mixer mixing an input signal, which is modulated by a carrier frequency, with the local signal to output an intermediate frequency signal whose carrier has an intermediate frequency. An intermediate frequency setting unit sets one of a plurality of intermediate frequencies and a demodulator extracts and reproduces the intermediate frequency signal at the set intermediate frequency.

### BRIEF DESCRIPTION OF THE DRAWINGS

Fig. 1 is a block diagram showing a configuration example of a reception system including a demodulation device according to a first embodiment of the present invention;
Fig. 2A to Fig. 2C are diagrams to describe operations of the first embodiment;
Fig. 3 is a diagram showing a reception system including a demodulation device according to a second embodiment of the present invention;
Fig. 4 is a diagram showing a reception system including a demodulation device according to a third embodiment of the present invention;
Fig. 5 is a diagram showing a configuration example of a reception system including a demodulation device according to a fourth embodiment of the present invention;
Fig. 6 is a diagram showing a configuration example of a reception system including a demodulation device according to a fifth embodiment of the present invention;
Fig. 7 is a diagram showing a configuration example of a reception system including a demodulation device according to a sixth embodiment of the present invention;
Fig. 8 is a diagram showing a frequency band of radio communication such as television broadcasting and cellular phones;
Fig. 9 is a diagram showing intermediate frequency reception;
Fig. 10 is a diagram showing a reception method according to a prior art;
Fig. 11 is a block diagram showing a configuration of a reception system;
Fig. 12A is a diagram showing an input signal in which channels are arranged at regular intervals, and Fig. 12B is a diagram showing a local signal corresponding to the input signal;
Fig. 13A to Fig. 13C are diagrams showing a concrete example of the signals in Fig. 12A and Fig. 12B;
Fig. 14A is a diagram showing an input signal in which channels are arranged at irregular intervals, and Fig. 14B is a diagram showing a local signal corresponding to the input signal;
Fig. 15A to Fig. 15C are diagrams showing a concrete example of the signals in Fig. 14A and Fig. 14B; and
Fig. 16 is a block diagram showing a configuration of another reception system.

### DETAILED DESCRIPTION OF THE PREFERRED EMBODIMENTS

First, the problems of the irregular arrangement of the carrier frequencies Freq_C will be described.

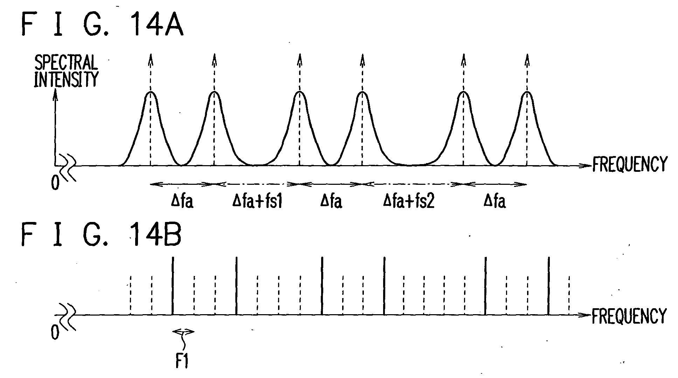

Fig. 14A shows an input signal in which channels are arranged at irregular intervals, and Fig. 14B shows a local signal corresponding to the input signal.

When the carrier frequencies of the input signals are not arranged at regular intervals, the reference signal frequency Freq_ref has to be set to a frequency F1 that is the greatest common divisor of oscillation frequencies of all the necessary local signals. That is, each interval between frequencies shown by the broken lines (including the solid lines) in Fig. 14B is the frequency F1. Integer multiplication of the greatest common divisor F1 makes it possible to generate the local signals at all the necessary frequencies shown by the solid lines. As a result, it is necessary for the frequency divider 1124 to be capable of setting division ratios in a wide range of several multiple to several tens multiple. However, when the reference signal frequency Freq_ref lowers, it influences band setting of the filter 1123 and so on to degenerate a capability of reducing phase noises of a PLL circuit 1111. This will cause a problem such as unsatisfied noise characteristics required for the circuit. Further, the frequency divider 1124 capable of setting the division ratios in a wide range is disadvantageous in light of the maximum operational speed and power consumption of the circuit.

Known methods of solving a problem of excessive increase in the size of a counter of the frequency divider 1124 are fractional frequency division and its applied circuit, namely, Δ-∑ (delta-sigma) fractional frequency division. However, in these frequency divisions, it is also necessary that the output frequencies can be set at intervals of the greatest common divisor of the carrier frequencies of all the signals, if the carrier frequencies are not arranged at regular intervals. This further increases the circuit scale and the problems of power consumption and speed due to the restrictions on the operational speed are not solved.

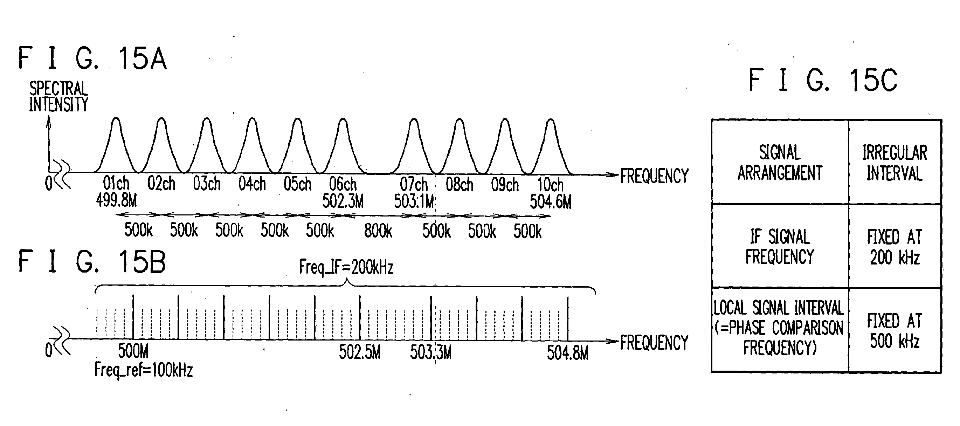

Fig. 15A to Fig. 15C show a concrete example of the signals in Fig. 14A and Fig. 14B.

Fig. 15A shows an input signal whose carrier frequencies of respective channels are arranged at irregular intervals. The frequency intervals from 01 ch to 06 ch are regular, namely, 500 kHz, and the frequency intervals from 07 ch to 10 ch are regular, namely, 500 kHz. However, the frequency interval between 06 ch and 07 ch is 800 kHz. The intervals in the whole channels from 01 ch to 10 ch are irregular. The carrier frequency Freq_C of 01 ch is 499.8 MHz, the carrier frequency Freq_C of 06 ch is 502.3 MHz, the carrier frequency Freq_C of 07 ch is 503.1 MHz, and the carrier frequency Freq_C of 10 ch is 504.6 MHz. That is, the carrier frequencies of the respective signals of 01 ch to 06 ch fall in a range from 499.8 MHz to 502.3 MHz and are arranged at 500 kHz intervals. The carrier frequencies of the respective signals of 07 ch to 10 ch fall in a range from 503.1 MHz to 504.6 MHz and are arranged at 500 kHz intervals.

Fig. 15B shows a local signal corresponding to the input signal in Fig. 15A. A frequency corresponding to the greatest common divisor of the local signals of the respective channels is 100 kHz, and in accordance therewith, the reference signal frequency Freq_ref is also 100 kHz. The local signal frequency Freq_L0 of 01 ch is 500 MHz (1/5000 frequency division), the local signal frequency Freq_L0 of 06 ch is 502.5 MHz, the local signal frequency Freq_L0 of 07 ch is 503.3 MHz, and the local signal frequency Freq_L0 of 10 ch is 504.8 MHz (1/5048 frequency division).

Therefore, the frequencies of the local signals of 01 ch to 06 ch fall in a range from 500 MHz to 502.5 MHz, and those of 06 ch to 10 ch fall in a range from 503.3 MHz to 504.8 MHz. The greatest common divisor of all these frequencies is 100 kHz. Required frequency division values to be set by the frequency divider 1124 in the PLL circuit 1111 range from 1/5000 to 1/5048, which are about 1/5 times of those in Fig. 13A to Fig. 13C.

The intermediate frequency Freq_IF is an absolute value of a difference between the carrier frequency Freq_C of the input signal and the local signal frequency Freq_L0. Therefore, the intermediate frequencies Freq_IF in all the channels are fixed at 200 kHz.

As shown in Fig. 15C, when the input signals of the respective channels are arranged at irregular intervals as in Fig. 15A, the frequencies Freq_IF of the intermediate frequency signals are fixed at 200 kHz, and the frequency interval of the local signals in Fig. 15B (the frequency Freq_ref of the phase comparison reference signal) is fixed at 100 kHz.

Spectral purity required for the local signals outputted by the synthesizer 1102 often necessitates heightening the reference signal frequency (phase comparison frequency) N × Freq_ref and the band of the filter 1123. In such cases, as shown in Fig. 16, a frequency divider 1601 can be provided in a subsequent stage of an output of the synthesizer 1102 so that the reference signal frequency N × Freq_ref for phase comparison is kept high, thereby enabling minute setting of the frequency interval to a desired value. However, in order to realize this structure in which the frequency divider 1601 is added, it is necessary to heighten an oscillation frequency of the VCO circuit 1112 by a frequency division ratio N of the frequency divider 1601 provided in the subsequent stage. Accordingly, the VCO circuit 1112 is oscillated in a higher frequency band. As a result, the frequency divider 1601 and a buffer circuit (a buffer circuit connected between the synthesizer 1102 and the frequency divider 1601) disposed in the subsequent stage need to operate at higher speed. Consequently, new problems arise in terms of the configuration and power consumption of the circuit.

### -First Embodiment-

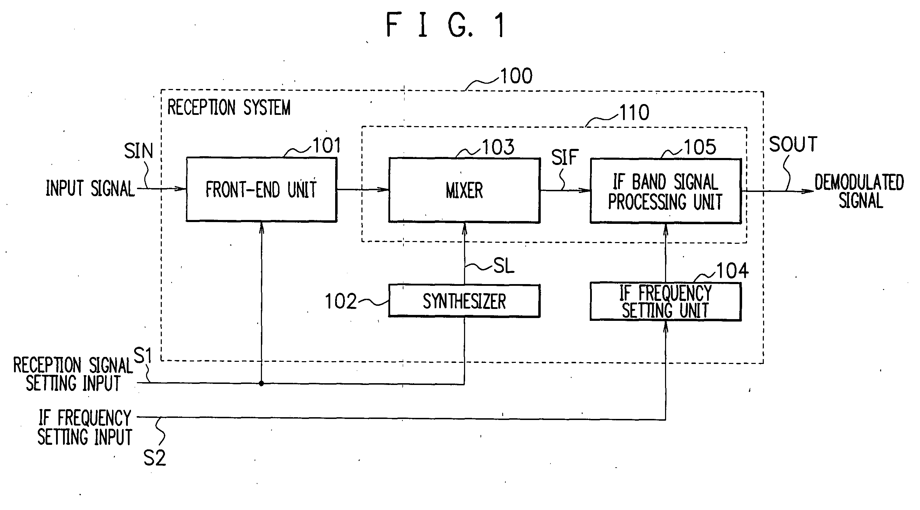

Fig. 1 shows a configuration example of a reception system 100 including a demodulation device according to a first embodiment of the present invention. The reception system 100 has a front-end unit 101, a synthesizer 102, an intermediate frequency setting unit 104, and a digital signal processing until 110. The digital signal processing unit 110 has a mixer 103 and an intermediate frequency band signal processing unit 105.

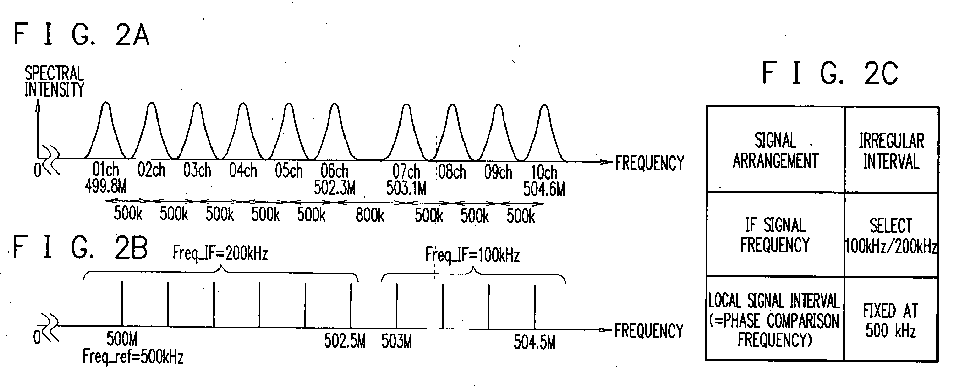

The front-end unit 101 includes a tuner, an amplifier, and so on, and it extracts and amplifies a signal of one channel among a plurality of channels of an input signal SIN according to a reception signal setting input signal (channel selection signal) S1. The input signal SIN is, as shown in Fig. 2A, a signal modulated by carrier frequencies of, for example, 10 channels, and the carrier frequencies of the respective channels are arranged at irregular intervals. The intervals in 01 ch to 06 ch are regular and 500 kHz. The interval between 06 ch and 07 ch is 800 kHz. The intervals in 07 ch to 10 ch are 500 kHz. The carrier frequency is 499.8 MHz in 01 ch, 502.3 MHz in 06 ch, 503.1 MHz in 07 ch, and 504.6 MHz in 10 ch.

The synthesizer 102, which has the same configuration as that of the synthesizer 1102 in Fig. 11, has a PLL circuit 1111 and a VCO circuit 1112. The PLL circuit 1111 has a reference signal generator 1121, a phase comparator 1122, a filter 1123, a frequency divider 1124, and an amplifier 1125. The reference signal generator 1121 outputs a reference signal at a frequency Freq_ref. The phase comparator 1122 compares the reference signal and an output signal of the amplifier 1125 to output the comparison result to the filter 1123. The VCO circuit 1112 adjusts the phase based on the output signal of the filter 1123 to generate a signal. The frequency divider 1124 divides a frequency of the output signal of the VCO circuit 1112 to 1/P. The amplifier 1125 amplifies an output signal of the frequency divider 1124 to output the resultant signal to the phase comparator 1122. As a result, the VCO circuit 1112 outputs a local signal SL having a frequency P × Freq_ref. The synthesizer 102 generates a local signal SL at a frequency of a designated channel according to the reception signal setting input signal (channel selection signal) S1. As shown in Fig. 2B, the local signals of the respective channels are arranged at regular intervals of 500 kHz. That is, the reference signal frequency Freq_ref of the reference signal generator 1121 is 500 kHz. The synthesizer 102 is capable of outputting the local signals at P × 500 kHz. The frequency of the local signal is 500 MHz in 01 ch, 502.5 MHz in 06 ch, 503 MHz in 07 ch, and 504.5 MHz in 10ch. The synthesizer 102 selectively outputs one of the local signals of the plural channels whose frequency intervals are fixed. Inc'identally, various other methods are possible for realizing the PLL circuit 1111. An externally inputted signal may be used instead of the reference signal generator. Further, the PLL circuit 1111 without the amplifier 1125 may be used.

The mixer 103 mixes (multiplies) the input signal from the front-end unit 101 with the local signal SL to output an intermediate frequency signal SIF whose carrier has an intermediate frequency. The intermediate frequency of the intermediate frequency signal SIF is a frequency with an absolute value of a difference between the carrier frequency of the input signal and the frequency of the local signal SL.
That is, the frequency of the local signal SL is a frequency different from the carrier frequency of the input signal. The intermediate frequency is a frequency lower than the carrier frequency of the input signal.

As shown by the input signal SIN in Fig. 2A and the local signal SL in Fig. 2B, in 01 ch, the carrier frequency of the input signal SIN is 499. 8MHz, the frequency of the local signal SL is 500 MHz, and the frequency of the intermediate frequency signal SIF is 200 kHz. In 06 ch, the carrier frequency of the input signal SIN is 502.3 MHz, the frequency of the local signal SL is 502.5 MH, and the frequency of the intermediate frequency signal is 200 kHz. Thus, in 01 ch to 06 ch, the frequencies of the intermediate frequency signals SIF are 200 kHz.

On the other hand, in 07 ch, the carrier frequency of the input signal SIN is 503.1 MHz, the frequency of the local signal SL is 503 MHz, and the frequency of the intermediate frequency signal SIF is 100 kHZ. In 10 ch, the carrier frequency of the input signal SIN is 504.6 MHz, the frequency of the local signal SL is 504.5 MHz, and the frequency of the intermediate frequency signal SIF is 100 kHz. Thus, in 07 ch to 10 ch, the frequencies of the intermediate frequency signals SIF are 100 kHz.

As described above, the mixer 103 outputs the intermediate frequency signals SIF at the intermediate frequencies that are different depending on the carrier frequencies of the input signals. The frequencies of the intermediate frequency signals SIF are 200 kHz for 01 ch to 06 ch, and 100 kHz for 07 ch to 10 ch.

The intermediate frequency setting unit 104 sets one of the plural (for example, two) intermediate frequencies according to an intermediate frequency setting input signal S2. For example, the intermediate frequency setting unit 104 sets the intermediate frequency of 200 kHz for 01 ch to 06 ch, and sets the intermediate frequency of 100 kHz for 0 ch to 10 ch.

The intermediate frequency band signal processing unit 105 includes a demodulator, and it extracts and reproduces the intermediate frequency signal SIF at the intermediate frequency set by the intermediate frequency setting unit 104, to output a demodulated signal SOUT.

Fig. 2A shows an input signal whose carrier frequencies of respective channels are arranged at irregular intervals as in Fig. 15A. The frequency intervals in 01 ch to 06 ch are regular and 500 kHz, and the frequency intervals in 07 ch to 10 ch are regular and 500 kHz. However, the interval between 06 ch and 07 ch is 800 kHz. The intervals in the whole 01 ch to 10 ch are irregular. The carrier frequency of 01 ch is 499 8 MHz, the carrier frequency of 06 ch is 502.3 MHz, the carrier frequency of 07 ch is 503.1 MHz, and the carrier frequency of 10 ch is 504.6 MHz. That is, in 01 ch to 06 ch, the carrier frequencies of the respective signals fall in a range from 499.8 MHz to 502.3 MH and are arranged at 500 kHz intervals. The carrier frequencies of the respective signals of 07 ch to 10 ch fall in a range from 503.1 MHz to 504.6 MHz and are arranged at 500 kHz intervals.

Fig. 2B shows a local signal corresponding to the input signal in Fig. 2A. The frequency intervals of the local signals of the respective channels are fixed at 500 kHz. In accordance therewith, the reference signal frequency Freq_ref of the reference signal generator 1121 of the PLL circuit 1111 in Fig. 11 in the synthesizer 102 is also 500 kHz. The local signal frequency of 01 ch is 500 MHz (1/1000 frequency division), the local signal frequency of 06 ch is 502.5 MHz, the local signal frequency of 07 ch is 503 MHz, and the local signal frequency of 10 ch is 504.5 MHz (1/1010 frequency division). That is, the intermediate frequency is set to 200 kHz when the frequencies of the local signals are 500 MHz to 502.5 MHz (01 ch to 06 ch), and when the frequencies of the local signals are 503.0 MHz to 504.5 MHz (07 ch to 10 ch), the intermediate frequency is set to 100 kHz. The greatest common divisor of all the frequencies of the local signals is 500 kHz. It is necessary for the frequency divider 1124 in the PLL circuit 1111 to be capable of setting the frequency division values ranging from 1/1000 to 1/1010, which are about five times of those in the case of Fig. 15A to Fig. 15C.

As shown in Fig. 2C, when the input signals of the respective channels are arranged at irregular intervals as in Fig. 2A, the frequencies of the intermediate frequency signals are 200 kHz or 100 kHz, and the frequency intervals of the local signals (frequency Freq_ref of the phase comparison reference signal) in Fig. 2B are fixed at 500 kHz. The reference signal frequency Freq_ref is 500 kHz, which is five times as high as that in the case of Fig. 15A to Fig. 15C.

Since the reference signal frequency Freq_ref of the PLL circuit 1111 can be made high, phase noises of the PLL circuit 1111 can be reduced. Further, the frequency divider 1124 of the PLL circuit 1111 is advantageous in light of the maximum operational speed and power consumption.

In this embodiment, the frequency of the intermediate frequency signal SIF is not fixed, but is selectable from a plurality of intermediate frequencies in accordance with the carrier frequency of the input signal SIN and in consideration of the influence of the interference by other unnecessary signals. Specifically, in this embodiment, the intermediate frequency for signal processing by the intermediate frequency signal processing unit 105 disposed in a subsequent stage of the mixer 103 is not fixed, but the intermediate frequency setting unit 104 capable of setting the intermediate frequency among the plural ones is added here. Consequently, it is possible to set the frequency interval of the local signals SL outputted by the synthesizer 102 large. Further, the phase comparison frequency Freq_ref of the phase comparator 1122 (Fig. 11) can be set high, so that the performance of the PLL circuit can be improved and the configuration of the PLL circuit can be simplified, thereby inhibiting the increase in power consumption. As a measure to solve the influence by the unfixed frequency of the intermediate frequency signal SIF, it is only necessary that the intermediate frequency setting unit 104 makes simple adjustment of selecting the intermediate frequency for the signal processing. Even when the input signals SIN of-the plural channels whose carrier frequencies are arranged at irregular intervals are inputted, it is possible to accurately extract and reproduce the intermediate frequency signals of the plural channels.

### -Second Embodiment-

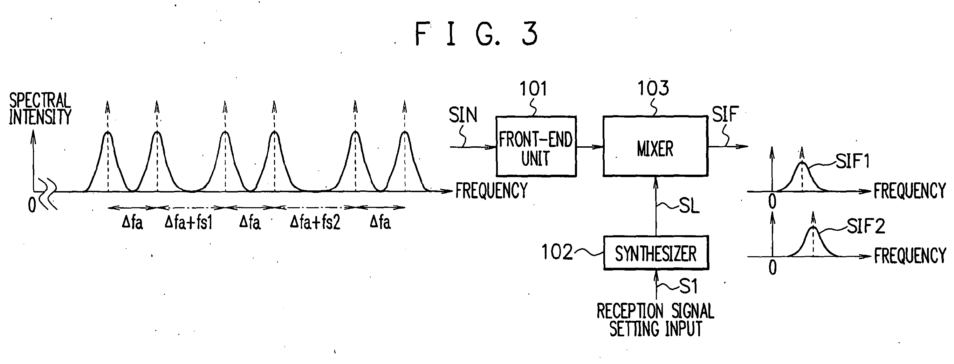

Fig. 3 shows a reception system including a demodulation device according to a second embodiment of the present invention. The reception system of the second embodiment has the same configuration as that of the first embodiment. In this description, the input signal SIN is an input signal in which frequency bands of a plurality of channels are discontinuous. Specifically, the arrangement intervals of the signals of the respective channels are regular and there partly exist frequency offsets. For example, the frequency intervals between 01 ch and 02 ch, between 03 ch and 04 ch, and between 05 ch and 06 ch are Δfa. An offset width fs1 not in use exists between 02 ch and 03 ch, and an offset width fs2 not in use exists between 04 ch and 05 ch. In this case, depending on the channel, a mixer 103 outputs one of, for example, two kinds of signals, namely, intermediate frequency signals SIF1 and SIF2 whose intermediate frequencies are different from each other. One of the two kinds of the intermediate frequencies is selected depending on the channel, so that it is possible to accurately extract and reproduce an intermediate frequency signal SIF.

### -Third Embodiment-

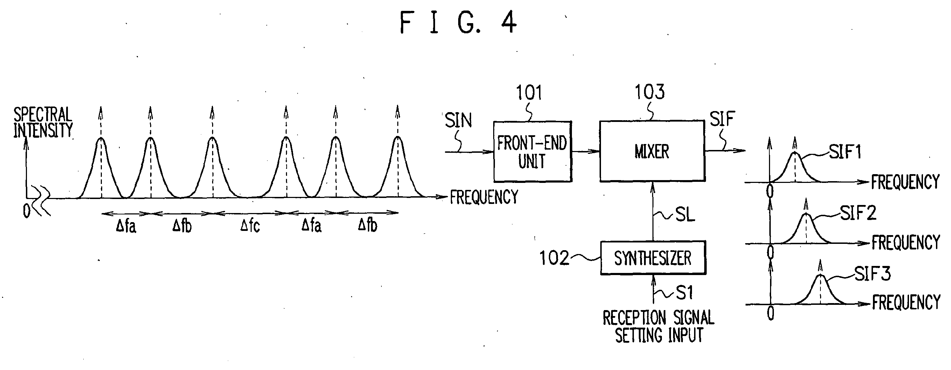

Fig. 4 shows a reception system including a demodulation device according to a third embodiment of the present invention. The reception system of the third embodiment has the same configuration as that of the first embodiment. In the description, an input signal SIN is an input signal of a plurality of channels whose carrier frequency intervals are of a plurality of kinds (for example, three kinds). For example, the frequency intervals between 01 ch and 02 ch and between 04 ch and 05 ch are Δfa, the frequency intervals between 02 ch and 03 ch and between 05 ch and 06 ch are Δfb, and the frequency interval between 03 ch and 04 ch is Δfc. In this case, depending on the channel, a mixer 103 outputs one of, for example, three kinds of intermediate frequency signals SIF1, SIF2, and SIF3 whose intermediate frequencies differ from one another. One of the three kinds of intermediate frequencies is selected depending on the channel, so that it is possible to accurately extract and reproduce an intermediate frequency signal SIF.

### -Fourth Embodiment-

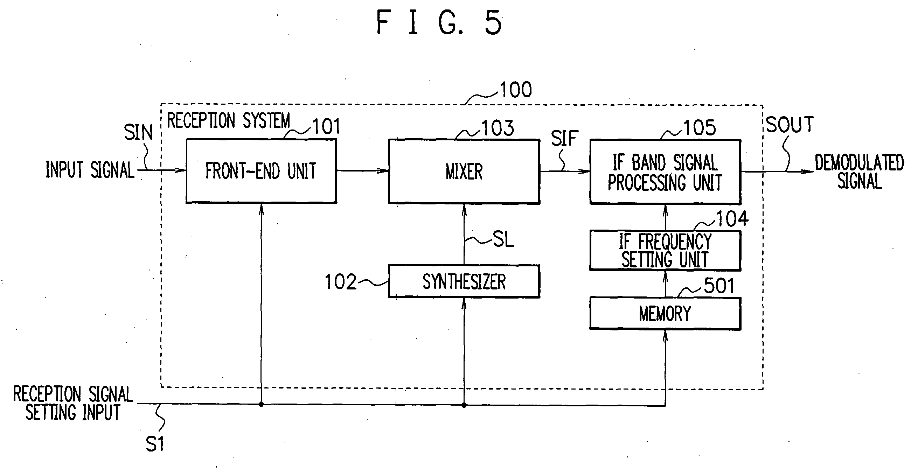

Fig. 5 shows a configuration example of a reception system including a demodulation device according to a fourth embodiment of the present invention. In the first embodiment, the intermediate frequency setting unit 104 sets the intermediate frequency according to the intermediate frequency setting input signal S2 that is externally inputted, but in the fourth embodiment, an intermediate frequency setting unit 104 sets an intermediate frequency according to a reception signal setting input signal (channel selection signal) S1. This can simplify the reception system.

A memory 501 stores the correspondence relation between the reception signal setting input signal S1 and the intermediate frequency, and outputs intermediate frequency information to the intermediate frequency setting unit 104 according to the reception signal setting input signal S1. The intermediate frequency setting unit 104 sets the intermediate frequency according to the intermediate frequency information. An intermediate frequency band signal processing unit 105 extracts and demodulates an intermediate frequency signal SIF at the set intermediate frequency to output a demodulated signal SOUT. Incidentally, a logic circuit may be used instead of the memory 501.

### -Fifth Embodiment-

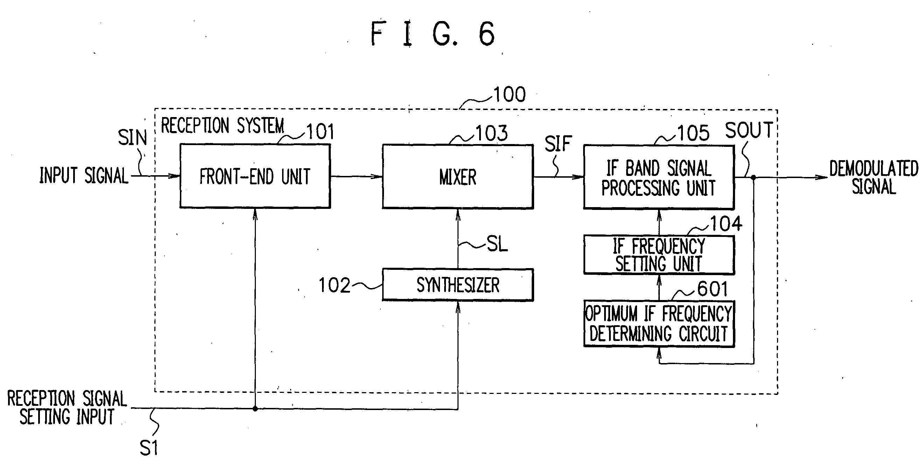

Fig. 6 shows a configuration example of a reception system including a demodulation device according to a fifth embodiment of the present invention. In the first embodiment, the intermediate frequency setting unit 104 sets the intermediate frequency according to the intermediate frequency setting input signal S2 that is externally inputted, but in the fifth embodiment, an intermediate frequency setting unit 104 sets an intermediate frequency according to a demodulated signal SOUT.

An optimum intermediate frequency determining circuit 601 determines an optimum intermediate frequency according to the demodulated signal SOUT. For example, a reference pattern is provided in a header portion of an input signal SIN. Since the determining circuit 601 has already recognized the position and contents of the reference pattern, it detects an error ratio of the demodulated signal SOUT corresponding to the reference pattern. When the error ratio is zero or small, the currently set intermediate frequency is correct, and therefore, the intermediate frequency setting unit 104 does not change the intermediate frequency. When the error ratio is large, the currently set intermediate frequency is incorrect, and therefore the intermediate frequency setting unit 104 changes the intermediate frequency to set another intermediate frequency. The intermediate frequency setting unit 104 repeats this setting change so that it will be able to set the intermediate frequency to a correct one in due time. An intermediate frequency band signal processing unit 105 can accurately extract and demodulate an intermediate frequency signal SIF at the set intermediate frequency. This makes it possible to automatically select the optimum intermediate frequency without any advance setting. Consequently, the system can be simplified and advance setting becomes unnecessary.

Incidentally, a demodulator may be provided in the determining circuit 601 and the intermediate frequency signal SIF may be inputted to the determining circuit 601. The intermediate frequency setting unit 104 can set the intermediate frequency based on the demodulated signal that results from the extraction and reproduction of the intermediate frequency signal SIF outputted by the mixer 103. Further, instead of detecting the error ratio of the reference pattern, information such as intensity of a partial frequency component of the reference pattern may be detected and a control signal may be outputted to the intermediate frequency setting unit 104.

### -Sixth Embodiment-

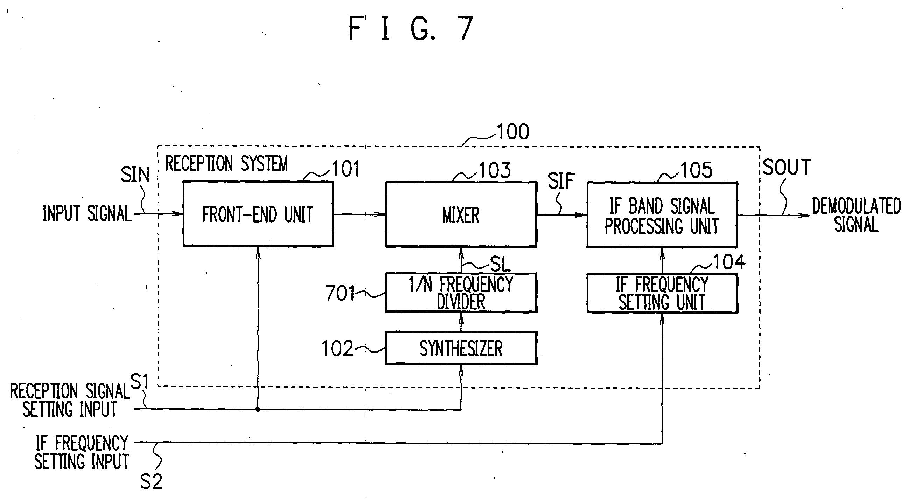

Fig. 7 shows a configuration example of a reception system including a demodulation device according to a sixth embodiment of the present invention. This embodiment is configured such that a 1/N frequency divider 701 similar to the 1/N frequency divider 1601 in Fig. 16 is provided in the reception system of the first embodiment. The 1/N frequency divider 701 is connected between the synthesizer 102 and the mixer 103.

The synthesizer 102, which has the same configuration as that of the synthesizer 1102 in Fig. 16, includes a PLL circuit 1111 and a VCO circuit 1112. The PLL circuit 1111 has a reference signal generator 1121, a phase comparator 1122, a filter 1123, a frequency divider 1124, and an amplifier 1125. The reference signal generator 1121 outputs a reference signal at a frequency N × Freq_ref that is N times as high as that in the first embodiment. The phase comparator 1122 performs phase comparison based on the reference signal. As a result, the VCO circuit 1112 outputs a signal at a frequency N × P × Freq_ref that is N times as high as that in the first embodiment. The 1/N frequency divider 701 divides a frequency of the output signal of the VCO circuit 1112 to 1/N to output a local signal SL at a frequency P × Freq_ref to the mixer 103. Incidentally, the PLL circuit 1111 without the amplifier 1125 may be used.

Spectral purity required for an output signal of the synthesizer 102 often necessitates heightening the reference signal frequency (phase comparison frequency) N × Freq_ref and the band of the filter 1123. In such cases, the frequency divider 701 is provided in a subsequent stage of an output of the synthesizer 102 so that the reference signal frequency N × Freq_ref for phase comparison is kept high, which enables minute setting of the frequency interval to a desired value.

Even in a case of input signals of a plurality of channels whose carrier frequencies are arranged at irregular intervals, frequency intervals of local signals of the respective channels can be set large. In this case, intermediate frequencies are not fixed but variable. It is possible to set one of a plurality of intermediate frequencies to accurately extract and reproduce an intermediate frequency signal at the set intermediate frequency.

When a PLL circuit is used in a synthesizer, it is possible to heighten the frequency of a reference signal of the PLL circuit to reduce phase noises. Further, a frequency divider of the PLL circuit is advantageous in light of the maximum operational speed and power consumption.

The present embodiments are to be considered in all respects as illustrative and no restrictive, and all changes which come within the meaning and range of equivalency of the claims are therefore intended to be embraced therein. The invention may be embodied in other specific forms without departing from the spirit or essential characteristics thereof.

## Claims

1. A demodulation device comprising:
a synthesizer generating a local signal;
a mixer mixing an input signal, which is modulated by a carrier frequency, with the local signal to output an intermediate frequency signal whose carrier has an intermediate frequency;
an intermediate frequency setting unit setting one of a plurality of intermediate frequencies; and
a demodulator extracting and reproducing the intermediate frequency signal at the set intermediate frequency.

2. The demodulation device according to claim 1,
wherein said mixer outputs intermediate frequency signals with different intermediate frequencies according to the carrier frequency of the input signal, and
wherein said demodulator accurately extracts and reproduces the intermediate frequency signal at the set intermediate frequency.

3. The demodulation device according to claim 1, wherein said synthesizer selectively outputs one of a plurality of local signals whose frequency intervals are fixed.

4. The demodulation device according to claim 1, wherein the intermediate frequency of the intermediate frequency signal is a frequency with an absolute value of a difference between the carrier frequency of the input signal and a frequency of the local signal.

5. The demodulation device according to claim 1,
wherein said mixer is capable of receiving input signals of a plurality of channels whose carrier frequencies are arranged at irregular intervals, and
wherein said demodulator accurately extracts and reproduces the intermediate frequency signals of the plural channels.

6. The demodulation device according to claim 1,
wherein said mixer is capable of receiving input signals of a plurality channels whose frequency bands are discontinuous, and
wherein said demodulator accurately extracts and reproduces the intermediate frequency signals of the plural channels.

7. The demodulation device according to claim 1,
wherein said mixer is capable of receiving input signals of a plurality of channels whose carrier frequencies are arranged at a plurality of kinds of intervals, and
wherein said demodulator accurately extracts and reproduces the intermediate frequency signals of the plural channels.

8. The demodulation device according to claim-1, wherein said intermediate frequency setting unit sets one of a plurality of intermediate frequencies according to a channel selection signal.

9. The demodulation device according to claim 8, further comprising a tuner extracting an input signal of one of a plurality of channels according to the channel selection signal to output the extracted input signal to said mixer.

10. The demodulation device according to clam 8, wherein said intermediate frequency setting unit includes one of a memory and a logic circuit outputting intermediate frequency information according to the channel selection signal.

11. The demodulation device according to claim 1, wherein said intermediate frequency setting unit sets the intermediate frequency based on a demodulated signal resulting from extraction and reproduction of the intermediate frequency signal outputted by said mixer.

12. The demodulation device according to claim 11, wherein said intermediate frequency setting unit detects an error ratio of the demodulated signal with a reference pattern in the input signal and changes the setting of the intermediate frequency to another intermediate frequency based on the error ratio.

13. The demodulation device according to claim 3, wherein said synthesizer has a PLL (Phase Locked Loop) circuit.

14. The demodulation device according to claim 1, wherein said mixer mixes the input signal with the local signal at a frequency different from the carrier frequency of the input signal.

15. The demodulation device according to claim 1, wherein the intermediate frequency is lower than the carrier frequency of the input signal.

16. The demodulation device according to claim 1, further comprising a tuner extracting an input signal of one channel among a plurality of channels according to a channel selection signal to output the extracted input signal to said mixer.

17. The demodulation device according to claim 16, wherein said synthesizer selectively outputs one of a plurality of local signals whose frequency intervals are fixed, according to the channel selection signal.

18. The demodulation device according to claim 1, wherein said synthesizer has a PLL (Phase Locked Loop) circuit and a VCO (Voltage Controlled Oscillator) circuit.

19. The demodulation device according to claim 18, wherein said synthesizer has a frequency divider dividing a frequency of an output signal of said voltage controlled oscillator to output a resultant signal to said mixer.

20. A demodulation method comprising:
generating a local signal;
mixing an input signal, which is modulated by a carrier frequency, with the local signal to output an intermediate frequency signal whose carrier has an intermediate frequency;
setting one of a plurality of intermediate frequencies; and
extracting and reproducing the intermediate frequency signal at the set intermediate frequency.
